# FASCICULE DE BREVET EUROPEEN

(11) **EP 3 887 337 B1**
(45) Date de publication et mention de la délivrance du brevet: **05.07.2023**
(21) Numéro de dépôt: 19870036.1
(22) Date de dépôt: 26.11.2019
(51) Int. Cl.: C04B 35/03, C04B 35/101, C04B 35/111, C04B 35/46, C04B 35/48, C04B 35/565, C04B 35/573, C04B 35/632, C04B 38/00

(54) **PROCEDE DE FABRICATION PAR ADDITION DE MATIERE D'UN SUPPORT INORGANIQUE DE FILTRATION A PARTIR D'UNE COMPOSITION THERMOFUSIBLE ET MEMBRANE OBTENUE**
VERFAHREN ZUR GENERATIVEN FERTIGUNG EINES ANORGANISCHEN FILTERTRÄGERS AUS EINER SCHMELZMASSE UND RESULTIERENDE MEMBRAN
METHOD FOR MATERIAL ADDITIVE MANUFACTURING OF AN INORGANIC FILTER SUPPORT FROM A HOT-MELT COMPOSITION AND RESULTING MEMBRANE

(30) Priorité: 27.11.2018 FR 1871952
(43) Date de publication de la demande: 06.10.2021
(73) Titulaire: Technologies Avancees et Membranes Industrielles, 26110 Nyons (FR)
(72) Inventeur: LESCOCHE, Philippe, 26110 PIEGON (FR); ANQUETIL, Jérôme, 84110 VAISON LA ROMAINE (FR)
(74) Mandataire: Cabinet Beau de Loménie
(86) Numéro de dépôt international: PCT/FR2019/052808
(87) Numéro de publication internationale: WO 2020/109716

(56) Documents cités:
- FR-A1- 2 723 541
- FR-A1- 3 006 606
- FR-A1- 3 024 664
- FR-A1- 3 060 410

## Description

La présente invention concerne un procédé de fabrication d'un support inorganique monolithique poreux, pouvant notamment être utilisé dans une membrane de filtration, et en particulier une membrane de filtration tangentielle. Plus précisément, le support poreux est préparé par une technique procédant par addition de matière.

Une membrane de filtration constitue une barrière sélective et permet, sous l'action d'une force de transfert, le passage ou l'arrêt de certains composants du milieu à traiter. Le passage ou l'arrêt des composants peut résulter de leur taille par rapport à la taille des pores de la membrane qui se comporte alors comme un filtre. En fonction de la taille des pores, ces techniques sont nommées microfiltration, ultrafiltration ou nanofiltration.

Une membrane est constituée d'un support poreux sur lequel sont déposées une ou plusieurs couches de séparation. De manière classique, le support est d'abord fabriqué par extrusion. Le support subit ensuite un frittage de manière à obtenir la solidité requise, tout en conservant une texture poreuse ouverte et interconnectée. Ce procédé contraint à l'obtention de canaux rectilignes à l'intérieur desquels sont ensuite déposées et frittées la ou les couches séparatrices. La membrane ainsi réalisée subit donc au minimum deux opérations de frittage. Les liants organiques ajoutés lors de la préparation de la pâte, avant son extrusion, brûlent en totalité pendant le frittage du support.

La Demanderesse a décrit dans la demande FR 3 006 606 la préparation d'une membrane de filtration dont le support poreux est réalisé par une technique additive, par répétition de dépôt d'un lit continu de poudre suivi d'une consolidation localisée selon un motif prédéterminé. Cette technique permet de préparer des membranes de filtration résistantes mécaniquement et adaptées à une utilisation en filtration tangentielle. Cependant, cette technique a l'inconvénient de nécessiter d'ajuster la fluidité de la poudre pour permettre son parfait écoulement lors du dépôt du lit de poudre. De plus, cette technique impose d'enlever la poudre non consolidée, pour éventuellement aussi la recycler, ce qui peut s'avérer délicat, long et onéreux, notamment lorsque ladite poudre non consolidée est présente dans des canaux non rectilignes du support poreux.

Dans le cadre de l'invention, il est proposé un nouveau procédé de préparation d'un support poreux qui ne présente pas les inconvénients de l'art antérieur, et en particulier qui est rapide, facile de mise en oeuvre, qui permet d'obtenir un support poreux résistant mécaniquement et dont la forme, et notamment celle des canaux non rectilignes, est aisément variée. Pour cela, le procédé utilise la technique de l'impression 3D permettant d'obtenir une structure tridimensionnelle crue manipulable, suivie d'une étape de frittage. Le support poreux obtenu est homogène, résistant mécaniquement et a une porosité adaptée à une utilisation en filtration, c'est-à-dire une porosité comprise entre 10 et 60% et qui est ouverte et interconnectée avec un diamètre moyen des pores allant de 0,5 µm à 50 µm.

Le procédé selon l'invention présente en outre l'avantage de permettre la préparation d'un support poreux monolithique de grande dimension (c'est-à-dire une hauteur supérieure à 1 m), et en particulier plus grande que celle possible à l'aide d'une technique additive de dépôt d'un lit continu de poudre suivi d'une consolidation localisée réalisée avec les machines présentes actuellement sur le marché, et notamment décrite dans la demande FR 3 006 606.

De plus, le procédé selon l'invention permet la préparation de support avec des dévers sans nécessiter l'emploi de supportage.

Dans ce contexte, la présente invention concerne un procédé de fabrication d'au moins un support inorganique monolithique poreux ayant une porosité comprise entre 10% et 60% et un diamètre moyen de pores appartenant à la gamme allant de 0,5 µm à 50 µm, à l'aide d'une machine d'impression 3D comportant au moins une tête d'extrusion montée mobile dans l'espace par rapport et au-dessus d'un plateau horizontal fixe, ladite machine d'impression 3D permettant le dépôt d'un cordon d'une composition inorganique pour bâtir, à partir d'un modèle 3D numérique, une structure tridimensionnelle crue manipulable destinée à former le ou les supports inorganiques poreux monolithiques, le procédé consistant :
- À disposer de la composition inorganique comportant une première phase inorganique solide pulvérulente sous la forme de particules de diamètre moyen compris entre 0,1 µm et 150 µm, et une seconde phase sous la forme d'une matrice comprenant au moins un polymère thermofusible,
- À alimenter la tête d'extrusion de la machine d'impression 3D avec la composition inorganique, ladite tête d'extrusion étant à une température permettant l'extrusion de la composition inorganique pour former le cordon,
- À bâtir à l'aide dudit cordon sur ledit plateau horizontal la structure tridimensionnelle crue manipulable conforme au modèle 3D numérique,
- À disposer dans un four de traitement thermique cette structure tridimensionnelle crue manipulable afin d'y réaliser une opération de frittage à une température comprise entre 0,5 et 1 fois la température de fusion d'au moins un matériau formant la phase inorganique solide pulvérulente.

Dans le cadre de l'invention, le support inorganique monolithique poreux peut notamment être utilisé comme support de membrane de filtration, et en particulier comme support de membrane de filtration tangentielle.

Le procédé selon l'invention comporte l'une et/ou l'autre des caractéristiques additionnelles suivantes :
- la consolidation de la structure tridimensionnelle crue manipulable est accélérée au fur et à mesure de l'extrusion dudit cordon à l'aide d'un dispositif de consolidation ;
- le dispositif de consolidation est un dispositif de refroidissement contrôlé provoquant la solidification d'au moins un polymère thermofusible contenu dans la matrice ;
- la structure tridimensionnelle crue manipulable est réalisée avec un dévers sans mettre en oeuvre de supportage ;
- la phase inorganique solide pulvérulente comprend un ou plusieurs oxydes, et/ou carbures et/ou nitrures, et/ou métaux, de préférence choisi(s) parmi l'oxyde de titane, l'oxyde d'aluminium, l'oxyde de zirconium, l'oxyde de magnésium, le carbure de silicium, le titane et l'acier inoxydable, et en particulier l'oxyde de titane ;
- la rhéologie de la composition inorganique est ajustée grâce à au moins l'une des caractéristiques suivantes : la granularité de la phase inorganique solide pulvérulente, la nature et/ou la proportion du ou des polymères thermofusibles, la température de la composition inorganique ;
- la structure tridimensionnelle crue manipulable est réalisée sous la forme de plusieurs sous-structures tridimensionnelles détachables les unes des autres ;
- la structure tridimensionnelle crue manipulable est réalisée sous la forme de plusieurs sous-structures tridimensionnelles reliées et maintenues les unes aux autres par au moins un pont sécable réalisé à l'aide du cordon de composition inorganique ;
- plusieurs têtes d'extrusion montées solidaires sont déplacées pour réaliser simultanément plusieurs structures tridimensionnelles indépendantes construites chacune par une tête d'extrusion
- la composition inorganique est sous forme de filament ou sous forme de granulé.

L'invention concerne aussi un support inorganique monolithique poreux susceptible d'être obtenu par le procédé selon l'invention.

L'invention concerne également un procédé de préparation d'une membrane de filtration tangentielle comprenant la préparation selon l'invention d'un support inorganique monolithique poreux dans lequel est ménagé au moins un canal de circulation pour le milieu fluide à traiter, suivie d'une étape de création d'une ou plusieurs couches séparatrices. L'invention concerne enfin une membrane de filtration tangentielle susceptible d'être obtenue selon un tel procédé.

Diverses autres caractéristiques ressortent de la description faite ci-dessous en référence aux dessins annexés qui montrent, à titre d'exemples non limitatifs, des formes de réalisation de l'objet de l'invention.
[Fig. 1] La **figure 1** est un schéma illustrant la machine d'impression 3D utilisée dans le cadre de l'invention.
[Fig. 2] La **figure 2** est une vue en coupe du dépôt de cordon de composition inorganique sur le plateau horizontal.
[Fig. 3] La **figure 3** est une vue en perspective du dépôt d'un premier cordon sur le plateau horizontal.
[Fig. 4] La **figure 4** est une vue en coupe du dépôt d'un cordon de composition inorganique sur une première strate de composition inorganique.
[Fig. 5] La **figure 5** est une vue en coupe selon l'axe AA de la **figure 4****.**
[Fig. 6] La **figure 6** est une vue en perspective montrant schématiquement deux strates composées chacune de cordons juxtaposés et déposés à 90° d'une strate à l'autre, les cordons de la premières strate étant continus et les cordons de la deuxième strate étant discontinus pour créer un vide rectangulaire.
[Fig. 7] La **figure 7** est une vue en coupe d'une structure crue hors invention pour laquelle un phénomène d'affaissement est observé.
[Fig. 8] La **figure 8** est une vue en coupe d'une structure crue selon invention pour laquelle aucun phénomène d'affaissement est observé.
[Fig. 9]La **figure 9** est une vue en coupe du dépôt d'un cordon de composition inorganique à l'aide d'une tête d'extrusion intégrant un dispositif de consolidation convectif.
[Fig. 10A-10B] Les **figures 10A** et **10B** sont des vues en coupe suivant l'axe A de la Figure 8 de la tête d'extrusion, avec une fente annulaire conique **(****figure 10A****)** ou des orifices inclinés (**figure 10B**).
[Fig. 11] La **figure 11** est une vue en coupe du dépôt d'un cordon de composition inorganique à l'aide d'une tête d'extrusion associée à un dispositif de consolidation radiatif.
[Fig. 12A] La **figure 12A** est une vue en coupe illustrant un mode de réalisation pour lequel la structure tridimensionnelle présente un dévers sans supportage.
[Fig. 12B]La **figure 12B** est une vue en coupe illustrant un mode de réalisation pour lequel la structure tridimensionnelle présente un dévers sans supportage, et dans lequel chaque strate est formée par la juxtaposition de plusieurs cordons.
[Fig. 13] La **figure 13** est une vue en coupe illustrant un mode de réalisation hors invention pour lequel la structure tridimensionnelle présente un dévers avec supportage.
[Fig. 14] La **figure 14** est une vue en perspective d'une structure crue manipulable en construction, conformément à l'invention.
[Fig. 15] La **figure 15** est une vue en perspective d'un support inorganique monolithique poreux conformément à l'invention.
[Fig. 16A-16B] La **figure 16A** est une vue en coupe d'un support inorganique monolithique poreux comportant un canal central rectiligne et sept canaux hélicoïdaux s'enroulant autour dudit canal central. La **figure 16B** est une vue en perspective des canaux du support de la **figure 16A**, un canal central et sept canaux périphériques hélicoïdaux selon la **figure 16A****.**
[Fig. 17] La **figure 17** est une vue en perspective de deux structures tridimensionnelles crues manipulables distinctes construites en parallèle.
[Fig. 18] La **figure 18** est une vue en perspective d'une structure tridimensionnelle crue manipulable formée de deux sous-structures tridimensionnelles détachables reliées par des ponts sécables.
[Fig. 19] La **figure 19** est une vue en perspective d'une structure tridimensionnelle crue manipulable sous la forme de trois sous-structures tridimensionnelles détachables reliées par des ponts sécables.

L'invention concerne la préparation d'un support inorganique monolithique poreux **1**, ainsi qu'une membrane de filtration comportant le support inorganique monolithique poreux **1** selon l'invention comprenant des canaux sur les parois desquels sont déposées une ou plusieurs couches séparatrices.

Dans le cadre de l'invention, on vise la fabrication de supports inorganiques monolithiques poreux pour membranes de filtration d'un fluide, et plus particulièrement pour membranes de filtration tangentielle. De tels supports poreux sont en général de géométrie tubulaire et comportent au moins un canal ou chemin de circulation pour le fluide à filtrer. Ces canaux de circulation présentent une entrée et une sortie. En général, l'entrée des canaux de circulation est positionnée à l'une des extrémités du support poreux, cette extrémité jouant le rôle de zone d'entrée pour le milieu fluide à traiter et leur sortie est positionnée à une autre extrémité du support poreux jouant le rôle de zone de sortie pour le rétentat. La zone d'entrée et la zone de sortie sont reliées par une zone périphérique continue au niveau de laquelle le perméat est récupéré.

Dans une membrane de filtration, les parois du ou des canaux de circulation sont continûment recouvertes par au moins une couche séparatrice qui assure la filtration du milieu fluide à traiter. La ou les couches séparatrices sont poreuses et ont un diamètre moyen de pores inférieur à celui du support. La couche séparatrice peut être soit déposée directement sur le support poreux (cas d'une couche de séparation monocouche), ou encore sur une couche intermédiaire de diamètre moyen de pores moindre, elle-même déposée directement sur le support poreux (cas d'une couche de séparation multicouche). Ainsi, une partie du milieu fluide à filtrer traverse la ou les couches séparatrices et le support poreux, de sorte que cette partie traitée du fluide, appelée perméat, s'écoule par la surface périphérique extérieure du support poreux. Les couches séparatrices délimitent la surface de la membrane de filtration destinée à être en contact avec le fluide à traiter et au contact de laquelle circule le fluide à traiter.

La porosité du support inorganique monolithique **1** est ouverte, c'est-à-dire qu'elle forme un réseau de pores interconnectés dans les trois dimensions, ce qui permet au fluide filtré par la ou les couches séparatrices de traverser le support poreux et d'être récupéré en périphérie. Le perméat est donc récupéré sur la surface périphérique du support poreux.

Le support inorganique monolithique poreux **1** a un diamètre moyen de pores appartenant à la gamme allant de 0,5 µm à 50 µm. La porosité du support inorganique monolithique poreux **1** est comprise entre 10 et 60%, de préférence entre 20 et 50%.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales l'aire située sous la courbe des fréquences obtenue par pénétration de mercure. En particulier, on pourra utiliser la technique décrite dans la norme ISO 15901-1 :2005 pour ce qui concerne la technique de mesure par pénétration de mercure.

La porosité du support, qui correspond au volume total des vides interconnectés (pores) présents dans la matière considérée, est une grandeur physique comprise entre 0 et 1 ou entre 0% et 100%. Elle conditionne les capacités d'écoulement et de rétention dudit corps poreux. Pour que le matériau puisse être utilisé en filtration, la porosité ouverte interconnectée totale doit être au minimum de 10% pour un débit satisfaisant de filtrat à travers le support, et au maximum de 60% afin de garantir une résistance mécanique du support poreux adaptée.

La porosité d'un corps poreux peut être mesurée en déterminant le volume d'un liquide contenu dans ledit corps poreux en pesant ledit matériau avant et après un séjour prolongé dans ledit liquide (eau ou autre solvant). Connaissant les masses volumiques respectives du matériau considéré et du liquide utilisé, la différence massique, convertie en volume, est directement représentative du volume des pores et donc de la porosité ouverte totale du corps poreux.

D'autres techniques permettent de mesurer précisément la porosité ouverte totale d'un corps poreux parmi lesquelles on peut citer :
- la porosimétrie par intrusion de mercure (norme ISO 15901-1 précitée) : injecté sous pression, le mercure remplit les pores accessibles aux pressions mises en oeuvre, et le volume de mercure injecté correspond alors au volume des pores,
- la diffusion aux petits angles : cette technique, qui utilise soit un rayonnement de neutrons, soit des rayons X, donne accès à des quantités physiques moyennées sur l'échantillon entier. La mesure consiste en l'analyse de la distribution angulaire de l'intensité diffusée par l'échantillon,
- l'analyse d'images 2D obtenues par microscopie,
- l'analyse d'images 3D obtenues par tomographie de rayons X.

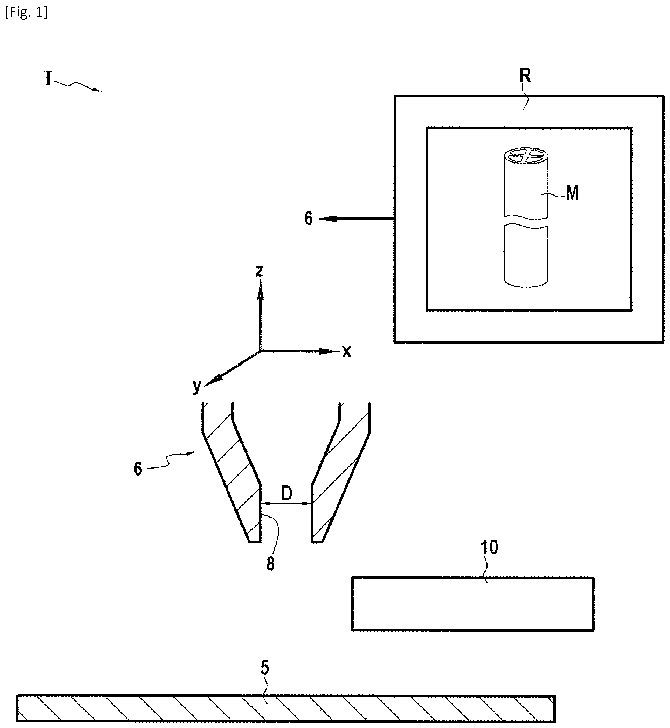

Le support inorganique monolithique poreux **1** selon l'invention est préparé par le frittage d'une structure tridimensionnelle crue manipulable **2**, qui est construite conformément à un modèle 3D numérique **M** par la superposition de strates **3ᵢ** d'une composition inorganique **4** à l'aide d'une machine d'impression tridimensionnelle **I** comportant notamment un plateau horizontal **5**, éventuellement amovible, au-dessus duquel est disposée au moins une tête d'extrusion **6 (****figure 1****).**

Par « structure tridimensionnelle crue » **2**, on entend une structure tridimensionnelle obtenue à partir de la superposition de strates **3ᵢ** d'une composition inorganique **4** et n'ayant pas encore subi de frittage. La forme et les dimensions de cette structure crue sont déterminées strate après strate par le modèle 3D numérique **M**. Cette structure tridimensionnelle crue **2** est qualifiée de « manipulable » car elle ne se déforme pas sous son propre poids, et peut même présenter des dévers, grâce à une consolidation accélérée qui lui confère une rigidité mécanique stable dans le temps, comme cela sera expliqué par la suite. Cette structure tridimensionnelle crue **2** peut ainsi être détachée du plateau horizontal **5** pour être déplacée sans déformation ni brisure, pour notamment subir ultérieurement une opération de traitement thermique nécessaire pour obtenir un support poreux monolithique conforme à l'invention.

Dans le cadre de l'invention, une « strate » **3ᵢ** est définie par un ensemble de cordons **7_{i,j}**, qu'ils soient continus ou discontinus, juxtaposés ou non juxtaposés, qui sont extrudés à une même altitude **z** suivant le modèle 3D numérique **M** prédéfini pour ladite altitude **z** (avec **i** étant un nombre entier allant de 1 à **n**, **n** étant un nombre entier représentant le nombre total de strates formant la structure tridimensionnelle crue manipulable **2** conformément au modèle 3D numérique **M**). Pour des raisons de clarté, la majorité des figures représente des strates composées d'un unique cordon. Néanmoins, bien souvent dans le cadre de l'invention, une strate **3ᵢ** est formée par la juxtaposition de plusieurs cordons **7_{i,j}**, continus ou discontinus.

Dans le cadre de l'invention, un « cordon » **7_{i,j}** correspond à un ruban de composition inorganique **4** qui prend forme au sortir de la tête d'extrusion **6** (avec **i** étant un nombre entier allant de 1 à **n**, **n** étant un nombre entier représentant le nombre total de strates formant la structure tridimensionnelle crue manipulable **2**, et **j** représentant un nombre entier correspondant au cordon considéré au sein de la strate à laquelle il appartient, **j** allant de 1 à **m**, **m** représentant le nombre total de cordons dans la strate considérée).

Le modèle 3D numérique **M** est déterminé par un logiciel de conception par ordinateur, afin de construire la structure tridimensionnelle crue **2**. Ce modèle 3D numérique **M** correspond à une structure virtuelle divisée en strates **3ᵢ** successives grâce à un logiciel trancheur qui permet, le cas échéant quand la structure tridimensionnelle présente des dévers, de définir le besoin et la position de piliers pour assurer un supportage de la structure tridimensionnelle crue en construction et éviter son affaissement.

La tête d'extrusion **6** de la machine d'impression tridimensionnelle **I** est supportée par un mécanisme de déplacement (non représenté sur les figures), tel qu'un robot, permettant son déplacement selon au moins trois axes (**x**, **y** et **z**). Ainsi, la tête d'extrusion **6** peut être déplacée selon un plan horizontal (axes **x** et **y**) et verticalement (axe **z**), grâce au mécanisme de déplacement qui est piloté par un ordinateur **R** de tous types connus en soi. Cet ordinateur **R** commande les mouvements du système de déplacement et par suite de la tête d'extrusion **6**, selon un chemin prédéterminé en fonction du modèle 3D numérique **M** à partir duquel est réalisée la structure tridimensionnelle crue **2** qui permet d'obtenir le support inorganique monolithique poreux **1** après une opération de traitement thermique.

La tête d'extrusion **6** comporte une entrée pour la composition inorganique **4** (non représentée sur les figures). Tel que cela est représenté dans les figures, la tête d'extrusion **6** comporte également un orifice d'écoulement **8** calibré, tel qu'une buse, mobile selon ledit modèle 3D numérique **M**. Selon le procédé de l'invention, la composition inorganique **4**, de préférence sous forme de filament ou de granulé, est introduite dans la tête d'extrusion **6** de la machine par une entrée afin d'alimenter l'orifice d'écoulement **8**. Une action mécanique peut être appliquée pour introduire la composition inorganique **4** dans la tête **6** par cette entrée.

Dans le cadre de l'invention, on entend par « granulé » (pellet en anglais) un petit élément solide dont la plus grande dimension peut varier de 1 mm à 1 cm, selon le mode d'obtention et le dimensionnement de la tête d'extrusion. Un granulé est constitué des divers matériaux composant ladite composition thermofusible, et en proportion conforme avec celle-ci. Un granulé peut être obtenu, après un pré-mélange approprié des divers composants, soit par extrusion à chaud, soit par compactage, soit par déshydratation ou plus généralement évaporation d'une phase liquide ayant servi audit pré-mélange. La forme des granulés peut varier selon leur mode d'obtention :
- petits cylindres dans le cas de l'extrusion à chaud,
- petits comprimés (pastilles), de forme sphérique ou autre, dans le cas du compactage,
- petits blocs informes dans le cas de l'évaporation d'une phase liquide (concassage d'un « cake » sec).

Dans le cadre de l'invention, on entend par « action mécanique » l'application d'une pression par tout moyen technique connu, comme par exemple un piston, une pompe ou une extrudeuse. Cette étape peut être réalisée de manière usuelle par l'homme du métier et ne sera pas détaillée ici.

L'orifice d'écoulement **8** est placé en vis-à-vis et à proximité du plateau horizontal **5**. L'orifice d'écoulement **8** est mobile, verticalement (i.e. selon l'axe **z**) et horizontalement (i.e. selon les axes **x** et **y**), par rapport au plateau horizontal **5** qui est fixe. Le déplacement vertical et/ou horizontal de l'orifice d'écoulement **8** par rapport au plateau horizontal fixe **5** permet la construction selon le modèle 3D numérique **M** de la structure tridimensionnelle crue manipulable **2** en appui sur le plateau horizontal **5** suite à l'extrusion du cordon **7_{i,j}** de composition inorganique **4** au travers de l'orifice d'écoulement **8.**

Selon le mode de réalisation illustré sur les figures, la tête d'extrusion **6** est munie d'un orifice d'écoulement **8** de section circulaire. Lorsque l'orifice d'écoulement **8** est de section circulaire, son diamètre **D** va avantageusement de 0,1 mm à 10 mm, de préférence de 0,1 mm à 1 mm et préférentiellement de 0,1 à 0,7 mm. Néanmoins, l'orifice d'écoulement **8** n'est pas nécessairement de section circulaire, et une autre forme pourrait être envisagée.

La composition inorganique **4** est avantageusement de nature céramique et/ou métallique. La composition inorganique **4** est composée d'une phase inorganique solide pulvérulente et d'une matrice solide à la température ambiante. La composition inorganique **4** n'est donc pas une poudre, mais se présente avantageusement sous la forme d'un filament ou d'un granulé.

La phase inorganique solide pulvérulente de la composition inorganique **4** comprend un ou plusieurs matériaux inorganiques solides, chacun sous la forme de particules de diamètre moyen compris entre 0,1 µm et 150 µm.

La notion de diamètre moyen est associée à celle de distribution de particules. En effet, les particules d'une poudre sont rarement de taille unique ou monodisperse et une poudre est donc le plus souvent caractérisée par une distribution de tailles de ses particules. Le diamètre moyen correspond alors à la moyenne d'une distribution des tailles des particules. La distribution peut être représentée de différentes manières, comme par exemple une distribution en fréquence ou cumulée. Certaines techniques de mesure donnent directement une distribution basée sur le nombre (microscopie) ou sur la masse (tamisage). Le diamètre moyen est une mesure de la tendance centrale.

Parmi les tendances centrales les plus utilisées on trouve ainsi le mode, la médiane et la moyenne. Le mode est le diamètre le plus fréquent dans une distribution : il correspond au maximum de la courbe de fréquence. La médiane représente la valeur d'où la fréquence totale des valeurs au-dessus et au-dessous est identique (autrement dit, on trouve le même nombre ou volume total de particules au-dessous de la médiane, qu'au-dessus). La moyenne doit quant à elle être calculée et elle détermine le point où les moments de la distribution sont égaux. Pour une distribution normale, le mode, la moyenne et la médiane coïncident, alors qu'ils diffèrent dans le cas d'une distribution non-normale.

Le diamètre moyen des particules constitutives d'une poudre inorganique peut être mesuré notamment par :
- diffraction de lumière laser pour des particules allant de 3 mm à environ 0,1 µm,
- sédimentation/centrifugation,
- diffusion dynamique de la lumière (en anglais, "dynamic light scattering (DLS)" pour des particules allant de 0,5 µm à 2 nm,
- analyse d'images obtenues par microscopie,
- diffraction de rayons X aux petits angles.

Le plus souvent, la composition inorganique **4** comprend en tant que matériau(x) inorganique(s) pulvérulent(s), seul ou en mélange, un oxyde et/ou un nitrure et/ou un carbure et/ou un métal. A titre d'exemples d'oxydes pouvant convenir dans le cadre de l'invention, on peut notamment citer les oxydes métalliques, et en particulier l'oxyde de titane, l'oxyde de zirconium, l'oxyde d'aluminium et l'oxyde de magnésium, l'oxyde de titane étant préféré. A titre d'exemples de carbures, on peut notamment citer les carbures métalliques, et en particulier le carbure de silicium. A titre d'exemples de nitrures pouvant être utilisés, on peut citer notamment le nitrure de titane, le nitrure d'aluminium, et le nitrure de bore. A titre d'exemples de métaux pouvant convenir dans le cadre de l'invention, on peut notamment citer le titane et l'acier inoxydable. Selon un mode préféré de réalisation, la composition inorganique **4** comprend au moins un oxyde métallique en tant que matériau inorganique pulvérulent, et de préférence l'oxyde de titane.

La matrice de la composition inorganique **4** est constituée d'un ou plusieurs polymères thermofusibles. La matrice est de nature organique.

Par « polymère thermofusible », on entend un polymère qui se ramollit sous l'effet de la chaleur.

A titre d'exemples de polymère thermofusible pouvant convenir dans le cadre de l'invention, on peut citer, utilisés seuls ou en mélange dans la matrice, les polymères ou famille de polymères suivants, éventuellement fonctionnalisés : l'acide polylactique (PLA), l'alcool polyvinylique (PVA), l'acrylonitrile butadiène styrène (ABS), le polyprolylène (PP), le polyéthylène, le polyéthylène téréphtalate (PET), le polyuréthane thermoplastique (TPU), les polyoléfines, les élastomères thermoplastiques (TPE), les élastomère base polyoléfine (TPE-O) et le polycarbonate.

La teneur massique en matériau(x) inorganique(s) pulvérulent(s) dans la composition inorganique **4** peut aller de 40 à 95 %, préférentiellement entre 70 et 90 % en poids, par rapport au poids total de la composition inorganique **4**.

Dans le cadre de l'invention, la composition inorganique **4** possède une rhéologie adaptée en terme de fluidité pour son extrusion au travers de l'orifice d'écoulement calibré **8**.

Dans le cadre de l'invention, la composition inorganique **4**, de préférence sous forme de filament ou de granulé, est chauffée dans la tête d'extrusion **6** de sorte que le ou les polymères thermofusibles ramollissent. De manière usuelle, uniquement l'orifice d'écoulement **8** de la tête d'extrusion **6** est chauffé pour ramollir le ou les polymères thermofusibles au niveau de l'orifice d'écoulement **8**, permettant alors l'extrusion de la composition inorganique **4.** La température de l'orifice d'écoulement **8** peut être ajustée en fonction du ou des polymères thermofusibles présents dans la composition inorganique **4.**

De plus, dans le cadre de l'invention, il est possible d'ajuster la rhéologie de la composition inorganique **4** grâce à sa température dans la tête d'extrusion, et/ou la granularité de la phase inorganique solide pulvérulente, et/ou grâce à la nature du ou des polymères thermofusibles et/ou grâce à leurs proportions.

Par granularité de la phase inorganique solide pulvérulente, on entend les dimensions des particules composant la phase inorganique solide pulvérulente. La granularité est caractérisée par la notion de diamètre moyen qui est décrite ci-dessus.

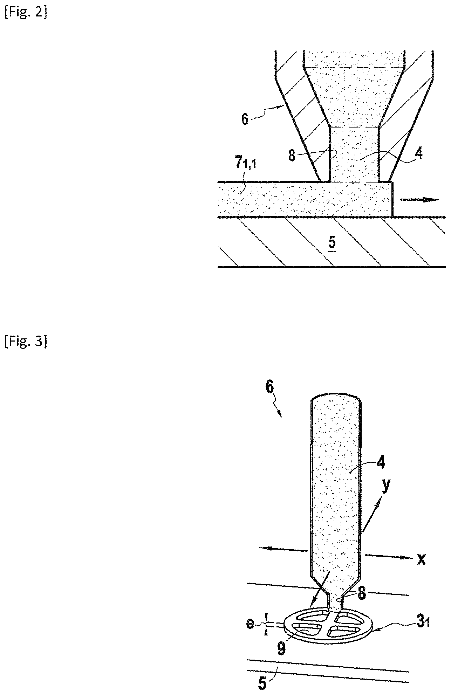

Comme cela est représenté à la **figure 2**, un cordon **7_{1,1}** de composition inorganique **4** est formé suite au passage de la composition inorganique **4** au travers de l'orifice calibré d'écoulement **8** grâce à une action mécanique sur la composition inorganique **4** pour assurer la pression nécessaire à l'extrusion de la composition inorganique **4.**

A la sortie de l'orifice calibré d'écoulement **8**, la température du cordon **7_{i,j}** de composition inorganique **4** diminue (éventuellement jusqu'à la température ambiante), et donc sa rigidité augmente, ce qui peut permettre d'assurer la stabilité de la structure tridimensionnelle crue. Mais, selon la géométrie de ladite structure tridimensionnelle, il peut apparaître en cours d'édification des phénomènes d'affaissement. L'invention prévoit, dans ce cas, d'accélérer la rigidification du cordon et de la structure tridimensionnelle à l'aide d'un dispositif permettant un refroidissement contrôlé tel que cela sera explicité ultérieurement.

Tel qu'illustré à la **figure 3**, dès que le cordon **7_{1,j}** de composition inorganique **4** est extrudé au travers de l'orifice d'écoulement **8**, celui-ci se dépose sur le plateau horizontal **5** pour former une première strate **3₁**, selon le modèle 3D numérique **M** prédéterminé par le logiciel de conception par ordinateur, grâce au déplacement horizontal de l'orifice d'écoulement **8** au-dessus du plateau horizontal **5**.

L'orifice d'écoulement **8** se déplace horizontalement, et donc parallèlement au plateau horizontal **5**, selon un chemin prédéterminé en fonction du modèle 3D numérique **M**, pour former la première strate **3₁**. A ce stade, une seule strate est formée sur le plateau horizontal **5**. Dans l'exemple de réalisation représenté à la **figure 3**, la première strate **3₁** a une forme circulaire comportant quatre orifices **9** de forme triangulaire aux angles arrondis. Cette forme est illustrée à titre d'exemple mais n'est pas limitante.

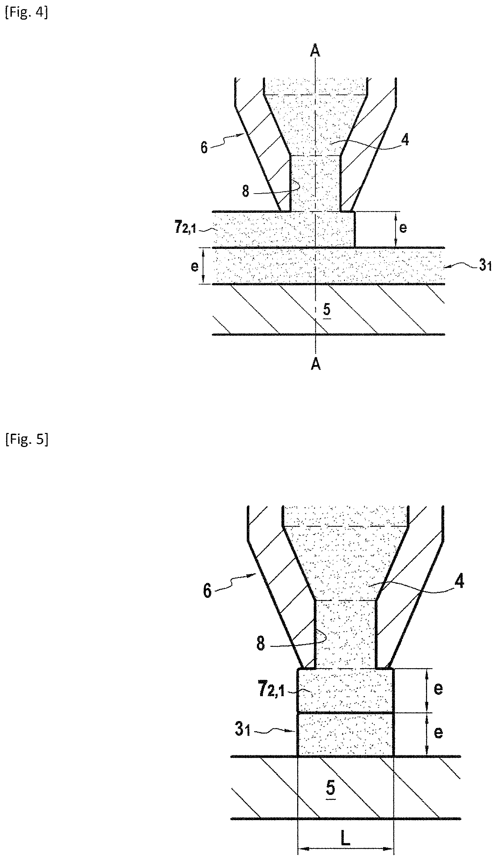

Après le dépôt de la première strate **3₁**, l'orifice d'écoulement **8** se déplace de sorte que le cordon **7_{2,j}** déposé forme la deuxième strate **3₂** conformément au modèle 3D numérique **M**, tel que cela est représenté aux **figures 4** et **5****.** Pour cela, l'orifice d'écoulement **8** se déplace verticalement (c'est-à-dire selon l'axe **z**) et horizontalement (c'est-à-dire selon les axes **x** et/ou **y**) jusqu'à la position souhaitée. L'extrusion de la composition inorganique **4** au travers de l'orifice d'écoulement **8** peut être continue ou discontinue. Ainsi, la deuxième strate **3₂** est déposée sur la première strate **3₁** par la superposition du cordon **7_{2,j}** sur la strate **3₁** préalablement déposée, conformément au modèle 3D numérique **M.**

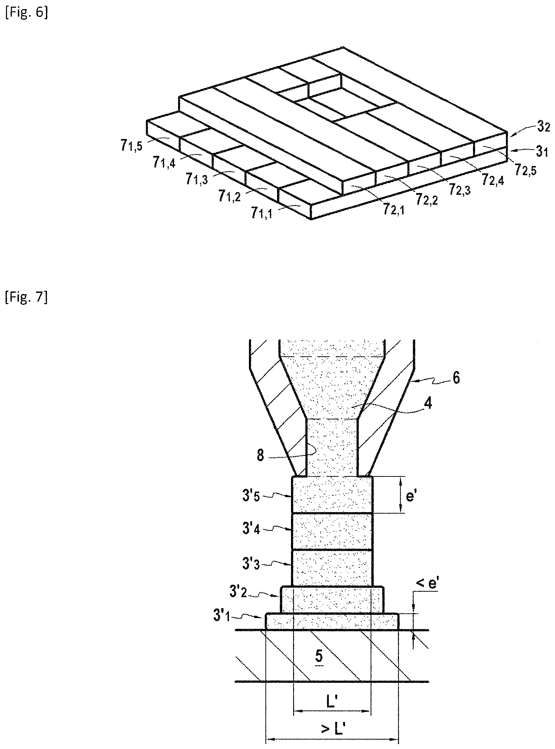

Dans l'exemple illustré aux **figures 4** et **5**, chaque strate **3ᵢ** ne comporte qu'un seul cordon **7_{i,j}** de composition céramique **4**, les cordons étant alignés d'une strate **3ᵢ** à la strate **3ᵢ₊₁** adjacente. Néanmoins, de préférence, chaque strate **3ᵢ** peut être formée de plusieurs cordons **7_{i,j}**. Dans le mode de réalisation illustré à la **figure 6**, les strates **3₁** et **3₂** sont formées chacune par la juxtaposition de cinq cordons, respectivement **7_{1,1}**, **7_{1,2}**, **7_{1,3}**, **7_{1,4}**, **7_{1,5}** d'une part et **7_{2,1}**, **7_{2,2}**, **7_{2,3}**, **7_{2,4}**, **7_{2,5}** d'autre part. Les cordons **7_{1,1}** à **7_{1,5}** et **7_{2,1}** à **7_{2,5}** sont déposés à 90° d'une strate à l'autre. Les cordons **7_{1,1}** à **7_{1,5}** sont juxtaposés et continus. Les cordons **7_{2,1}** à **7_{2,5}** sont discontinus afin de créer un vide, de forme rectangulaire dans l'exemple illustré.

Lorsque le ou les cordons **7_{2,j}** sont déposés, formant ainsi la deuxième strate **3₂**, l'étape précédemment décrite de déplacement vertical et horizontal de la tête d'extrusion **6** est répétée autant de fois que nécessaire, afin de former la structure tridimensionnelle crue manipulable **2** selon le modèle 3D numérique **M**, déterminé par le logiciel de conception par ordinateur et le logiciel « trancheur ». La croissance de la structure tridimensionnelle crue manipulable **2** est réalisée selon l'axe **z.** Plus précisément, la structure tridimensionnelle crue manipulable **2** est bâtie sur le plateau horizontal **5** par empilement des strates **3₁** à **3ₙ** formées à partir des cordons **7_{1,1}** à **7_{n,m}** conformément au modèle 3D numérique **M.**

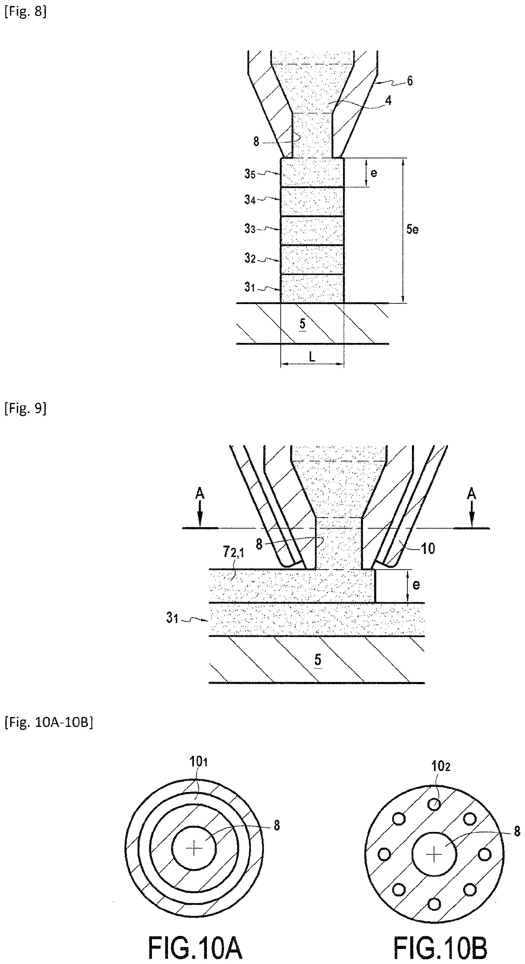

Tel que représenté sur les figures, chaque strate **3ᵢ** est caractérisée par une épaisseur **e** et les cordons **7_{i,j}** par une épaisseur **e** et une largeur **L.** L'épaisseur **e** d'un cordon **7_{i,j}** est une dimension dudit cordon **7_{i,j}** prise entre l'orifice d'écoulement **8** de la tête d'extrusion **6** et la surface de la strate précédente **3ᵢ₋₁** ou celle du plateau horizontal **5** sur lequel il est déposé. L'épaisseur de la strate **3ᵢ** est donc identique à celle du cordon **7_{i,j}**, et chaque cordon **7_{i,j}** a une même épaisseur **e**. La largeur **L** du cordon **7_{i,j}** est dépendante du débit volumique de la composition inorganique **4** extrudée à travers l'orifice calibré **8**, de la vitesse de déplacement de l'orifice calibré **8** et du rapport **e**/**D**, **D** étant le diamètre de l'orifice d'écoulement **8.** Dans les exemples de réalisation représentés sur les **figures 5** et **8**, les cordons **7_{i,j}** et **7_{i+1,j +1}** ont une même largeur **L.**

La Demanderesse a observé que la tenue mécanique de la structure tridimensionnelle crue pouvait, dans certains cas, être insuffisante avec pour conséquence une déformation de la structure tridimensionnelle crue résultant de son affaissement. Cette déformation peut résulter de l'affaissement de strates insuffisamment consolidées se déformant sous le poids des strates déposées dessus. La **figure 7** illustre ce phénomène d'affaissement. La Demanderesse a observé que cette déformation peut également résulter d'un affaissement du cordon immédiatement après son extrusion : un affaissement du cordon peut avoir lieu dès sa sortie de la tête d'extrusion, générant alors une déformation de la section droite du cordon, et notamment une hauteur finale du cordon inférieure à celle prévue selon le modèle 3D numérique. Dans le cas où la structure tridimensionnelle comporte un dévers, la déformation peut également résulter de l'affaissement des parties de cordon en situation de porte-à-faux lorsque la structure tridimensionnelle crue est bâtie sans supportage.

Selon un mode de réalisation, pour éviter tout phénomène d'affaissement, une accélération de la consolidation est réalisée préalablement à l'étape de frittage pour accroître rapidement la tenue mécanique de la structure tridimensionnelle crue conforme au modèle numérique **M** comme illustré à la **figure 8****.** Dans ce cas, chaque strate **3ᵢ** conserve sa forme initiale et ses dimensions initiales dans le temps, et en particulier son épaisseur **e** et sa largeur **L** initiales.

Cette accélération de la consolidation peut être réalisée au fur à mesure de l'édification de la structure tridimensionnelle crue manipulable **2** à l'aide d'un dispositif de consolidation **10** qui se déplace de manière identique à l'orifice d'écoulement **8.** Comme illustré de manière schématique à la **figure 1**, le dispositif de consolidation **10** est placé à proximité de la tête d'extrusion **6** en étant ou non porté par la tête d'extrusion **6**. Plus précisément, le dispositif de consolidation **10** peut être solidaire ou non de la tête d'extrusion **6** ou faire partie de la tête d'extrusion **6.** Si le dispositif de consolidation **10** n'est pas porté par la tête d'extrusion **6**, il en suit les déplacements. Ainsi, l'accélération de la consolidation est réalisée au fur et à mesure de l'extrusion de la composition inorganique **4.** De préférence, l'accélération de la consolidation est réalisée dès l'extrusion du cordon **7_{i,j}** en sortie de l'orifice d'écoulement **8.**

Ce dispositif de consolidation **10** permet d'accélérer la solidification d'au moins un polymère thermofusible compris dans la composition inorganique **4.** En d'autres termes, la solidification du ou des polymères thermofusibles grâce au dispositif de consolidation **10** est suffisamment rapide pour conférer une tenue mécanique à la structure tridimensionnelle crue manipulable **2**, et suffisante pour éviter tout affaissement de celle-ci, même lorsqu'elle présente des dévers.

Le refroidissement contrôlé est obtenu par un dispositif de consolidation **10** qui peut être convectif ou radiatif.

Dans le cas d'un dispositif de consolidation **10** convectif, un ou plusieurs jets d'air sont orientés vers le cordon **7_{i,j}** : le refroidissement est alors réalisé uniquement par un renouvellement de l'atmosphère autour dudit cordon **7_{i,j}**. Tel que cela est représenté aux **figures 9, 10A** et **10B****,** le dispositif de consolidation **10** peut être intégré à la tête d'extrusion **6** autour de l'orifice d'écoulement **8.** Le dispositif de consolidation **10** convectif peut être sous forme d'une fente annulaire conique **10₁** disposée autour de l'orifice d'écoulement **8 (****figure 10A****),** ou sous forme de plusieurs orifices **10₂** disposés autour de l'orifice d'écoulement **8 (****figure 10B****).**

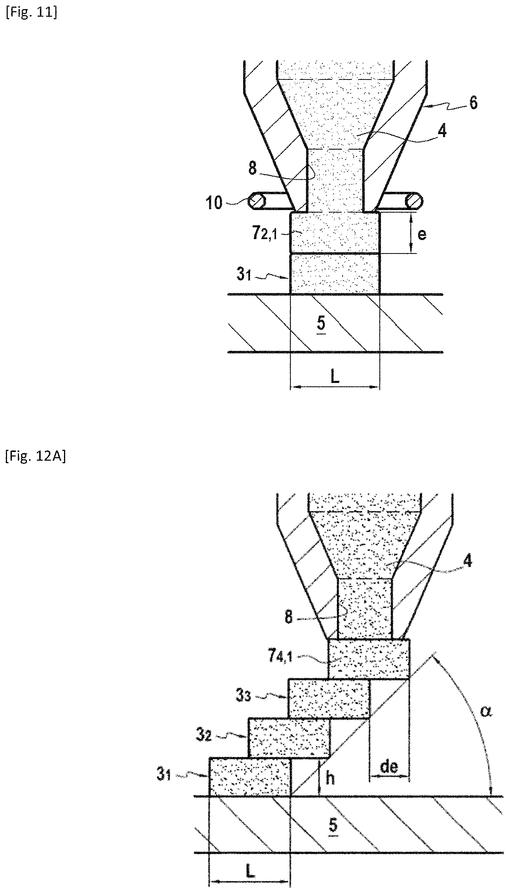

Dans le cas d'un dispositif de consolidation **10** par radiation, le dispositif peut être disposé autour de l'orifice d'écoulement **8**, en étant solidaire ou non de la tête d'extrusion **6**, tel que cela est représenté à la **figure 11****.**

L'accélération de la consolidation peut être ajustée en fonction de la composition inorganique **4** utilisée. En effet, selon la nature de la composition inorganique **4**, et notamment sa rhéologie, l'accélération de la consolidation devra être plus ou moins importante pour éviter tout phénomène d'affaissement de la structure tridimensionnelle crue manipulable **2**. L'ajustement de l'accélération de la consolidation peut être réalisé en adaptant le flux d'air et/ou l'énergie radiative générée(s) par le dispositif de consolidation **10**.

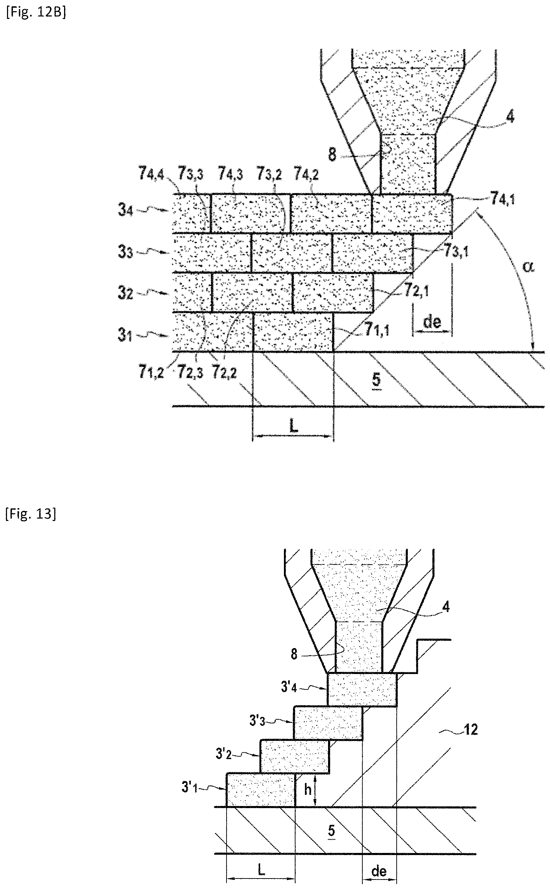

Selon le mode de réalisation représenté aux **figures 5** et **8****,** les strates **3ᵢ** sont de même forme et de même dimension et sont alignées (c'est-à-dire empilées selon l'axe **z**). Ainsi, un support inorganique monolithique poreux **1** comportant un ou plusieurs canaux **11** rectilignes peut être fabriqué. Ce mode de réalisation n'est pas limitatif. Par exemple, selon les modes de réalisation illustrés aux **figures 12A** et **12B**, les différentes strates **3ᵢ** sont empilées selon l'axe **z** de telle sorte que la structure tridimensionnelle crue manipulable **2** présente un dévers ou contre-dépouille ou porte-à-faux **de** résultant d'un non-alignement du cordon **7_{i,j}** par rapport à la strate **3ᵢ₋₁** sur lequel il est déposé. L'angle de contredépouille **α** (en anglais « overhang angle » - correspondant à Arc tg (**e**/**de**)) représente l'amplitude du dévers : plus **α** est petit, plus l'amplitude du dévers est grande.

Le procédé de l'invention, éventuellement l'accélération de la consolidation du cordon **7_{i,j}** au moment de sa dépose, et éventuellement la rhéologie de la composition inorganique **4**, confèrent une tenue mécanique suffisante pour que la structure tridimensionnelle crue manipulable **2** ne se déforme pas et soit stable mécaniquement dans le temps même lorsque celle-ci présente un dévers, ce qui permet de supprimer le besoin de supportage **12** qui est habituellement nécessaire pour éviter l'affaissement d'une structure tridimensionnelle crue présentant un dévers (voir **figure 13** où un supportage provisoire **12** de forme complémentaire à la structure tridimensionnelle en construction est imprimé simultanément). Cette accélération de la consolidation permet, pour une composition inorganique **4** donnée et pour des paramètres d'impression donnés (diamètre de l'orifice d'écoulement **8**, vitesse d'extrusion du cordon **7_{i,j}**, vitesse de déplacement de la tête d'extrusion **6**), de s'adapter à l'amplitude du dévers. En résumé, des structures tridimensionnelles crues **2** peuvent être bâties sans qu'un phénomène d'affaissement soit observé, même lorsque cette structure présente un dévers et en l'absence de supportage.

La présence d'au moins un dévers au sein de la structure tridimensionnelle crue manipulable **2** permet la fabrication d'un support inorganique monolithique poreux **1** comportant au moins un canal hélicoïdal, tel que décrit dans la demande FR 3 060 410 de la Demanderesse. Un tel support poreux permet l'obtention d'une membrane de filtration tangentielle ayant une géométrie adaptée permettant une diminution du risque de colmatage de la couche de séparation, et donc une augmentation du flux de filtrat.

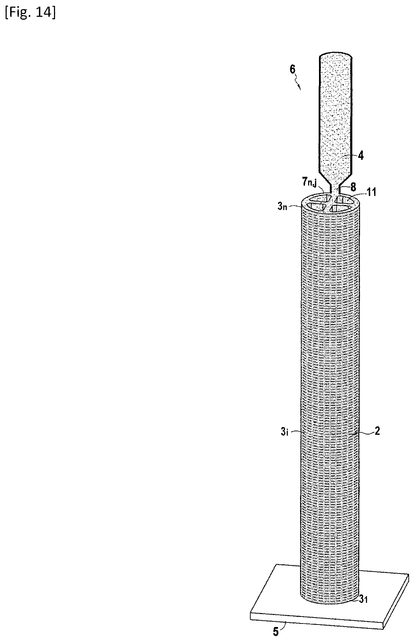

Tel qu'illustré à la **figure 14****,** le procédé selon l'invention permet de bâtir une structures tridimensionnelle crue manipulable **2** par empilement des strates **3₁** à **3ₙ** selon le modèle 3D numérique **M.**

Enfin, une fois la structure tridimensionnelle crue manipulable **2** obtenue, celle-ci est soumise à un traitement thermique afin de réaliser une opération de frittage. Pour cela, la structure tridimensionnelle crue manipulable **2** est placée dans un four dont la température varie entre 0,5 et 1 fois la température de fusion d'au moins l'un des matériaux inorganiques solides pulvérulents présents dans la composition inorganique **4** et pendant un temps suffisamment long pour permettre le frittage de l'ensemble de cette structure tridimensionnelle crue manipulable **2.**

Lors de l'étape de frittage, les dimensions du support poreux **1** peuvent varier par rapport aux dimensions de la structure tridimensionnelle crue manipulable **2.** Cette variation dépend de la nature de la composition inorganique **4** et des conditions de frittage. Le logiciel de conception par ordinateur utilisé dans le cadre de l'invention permet d'anticiper cette variation et le modèle 3D numérique **M** est déterminé en fonction de celle-ci.

Le procédé selon l'invention permet d'obtenir un support inorganique monolithique **1** avec une texture poreuse interconnectée adaptée à une utilisation en filtration, et en particulier en filtration tangentielle. De plus, le support inorganique monolithique poreux **1** ainsi obtenu a une résistance mécanique adaptée à une utilisation en filtration, et en particulier en filtration tangentielle. Plus précisément, le support inorganique monolithique poreux **1** supporte une pression interne d'au moins 30 bars sans éclatement, et de préférence au moins 50 bars sans éclatement. Une pression d'éclatement correspond à la pression à laquelle un support éclate sous l'effet d'une pression interne appliquée dans les canaux avec de l'eau.

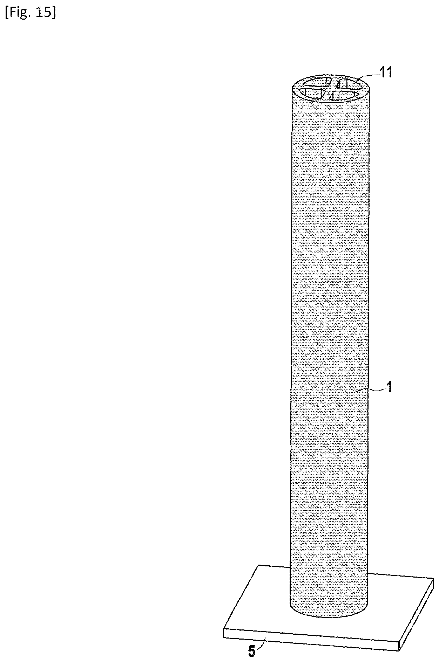

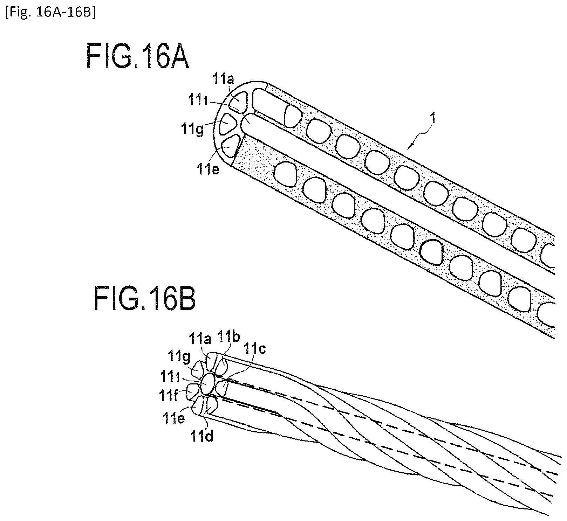

La structure tridimensionnelle construite peut être de toute forme, et en particulier de forme allongée, possédant une section droite transversale circulaire, et présentant une surface extérieure cylindrique comme illustré à la **figure 15****.** Cette forme n'est néanmoins pas obligatoire et une autre forme pourrait être envisagée selon l'application souhaitée. En effet, le procédé selon l'invention permet de réaliser des supports inorganiques monolithiques poreux **1** de formes variées. En particulier lorsque le support inorganique monolithique poreux **1** est destiné à être utilisé dans une membrane de filtration tangentielle, celui-ci comporte au moins un canal **11** pour la circulation du fluide à traiter, et avantageusement plusieurs canaux **11**. Ces canaux **11** peuvent être rectilignes ou non rectilignes, interconnectés ou non interconnectés. Dans l'exemple illustré à la **figure 15**, le support monolithique poreux **1** comporte quatre canaux **11** formés par la superposition des orifices **9** des strates **3₁** à **3ₙ** empilées, lesdits canaux **11** étant rectilignes, non interconnectés, et de section triangulaire aux angles arrondis. La géométrie et le nombre de canaux **11** sont déterminés par le modèle 3D numérique **M** choisi, et ne sont donc pas limités à ce qui est illustré à la **figure 15****.** Par exemple, tel que cela est illustré aux **figures 16A** et **16B**, le support peut comporter un canal central rectiligne **11₁**, et des canaux hélicoïdaux **11ₐ, 11_{b}, 11_{c}, 11_{d}, 11ₑ, 11_{f}, 11_{g}** formant une spirale autour du canal central rectiligne **11₁**.

Selon un premier mode de réalisation, le procédé selon l'invention permet la préparation d'une seule structure tridimensionnelle crue manipulable **2** à la fois, conduisant à un seul support monolithique poreux **1** à la fois après frittage.

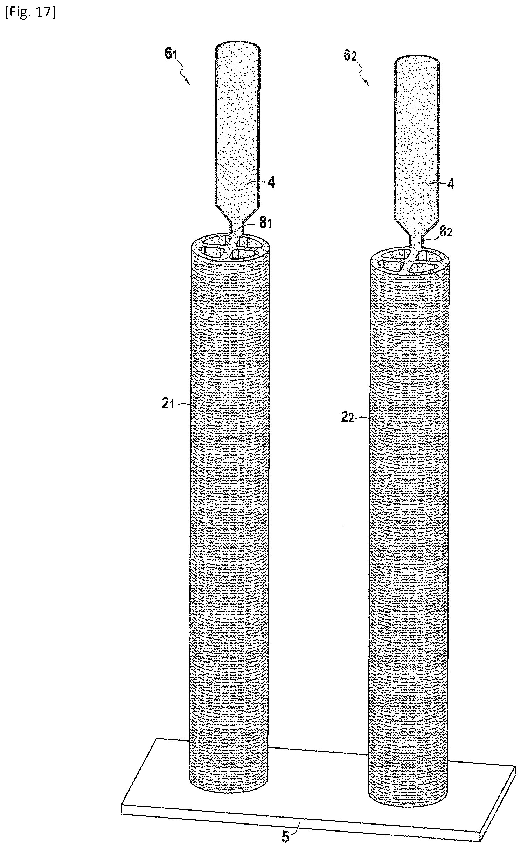

Selon un deuxième mode de réalisation illustré à la **figure 17**, le procédé décrit ci-dessus permet la préparation simultanée de deux structures tridimensionnelles crues manipulables indépendantes **2₁** et **2₂**, c'est-à-dire non reliées entre elles, destinées à subir une étape de frittage pour former deux supports monolithiques poreux **1₁** et **1₂**. Pour cela, la machine comprend deux orifices d'écoulement **8₁** et **8₂** : chaque structure tridimensionnelle crue manipulable indépendante **2₁** et **2₂** est alors préparée par empilement de strates faites chacune respectivement à partir d'un cordon issu chacun d'un orifice d'écoulement distinct, respectivement **8₁** et **8₂**. Dans l'exemple illustré à la **figure 17**, les deux structures tridimensionnelles crues manipulables **2₁** et **2₂** sont de forme et de dimensions identiques et sont construites par un déplacement identique des orifices d'écoulement **8₁** et **8₂** qui sont de préférence montés solidaires. Néanmoins, l'exemple illustré n'est pas limitant : il peut être envisagé de préparer plus de deux structures tridimensionnelles crues manipulables en même temps, et notamment trois ou quatre, ces structures tridimensionnelles crues manipulables étant de forme et/ou de dimension identiques ou différentes.

Selon un troisième mode de réalisation, le procédé décrit ci-dessus permet la préparation d'une structure tridimensionnelle crue manipulable **2** sous la forme de plusieurs sous-structures tridimensionnelles identiques ou différentes et détachables l'une de l'autre. Selon ce mode de réalisation, les sous-structures tridimensionnelles sont reliées entre elles par au moins un pont **13** sécable, formé à l'aide du cordon **7_{i,j}** de composition inorganique **4**, et de préférence plusieurs ponts **13** de forme et/ou de dimension identiques ou différentes, espacés les uns des autres, et de préférence alignés.

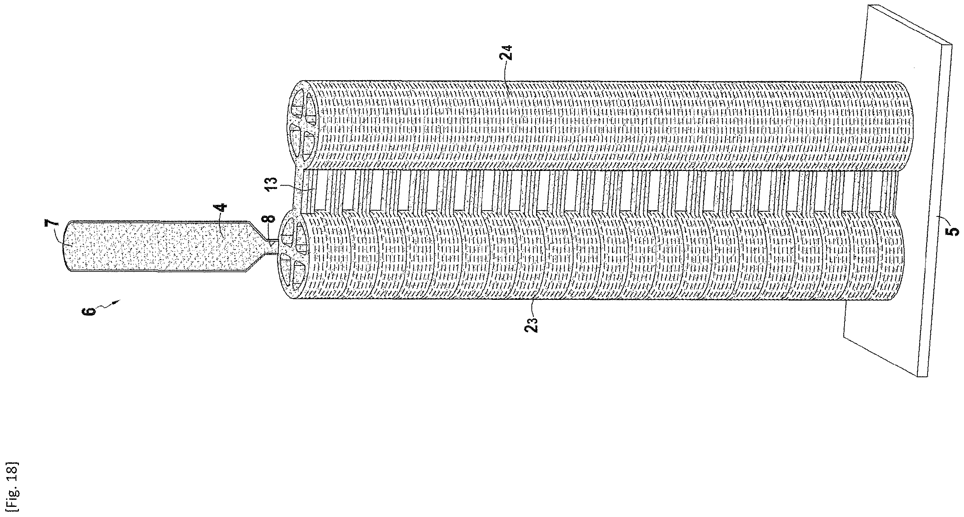

Selon ce mode de réalisation illustré à la **figure 18**, le procédé selon l'invention permet la fabrication d'une structure tridimensionnelle crue manipulable **2** sous la forme de deux sous-structures tridimensionnelles **2₃** et **2₄** reliées avec plusieurs ponts sécables **13** identiques, sur toute la hauteur des sous-structures tridimensionnelles crues **2₃** et **2₄**. Les deux sous-structures tridimensionnelles **2₃** et **2₄** sont de forme et de dimension identiques, et comportent quatre canaux **11** rectilignes de section droite transversale triangulaire aux angles arrondis.

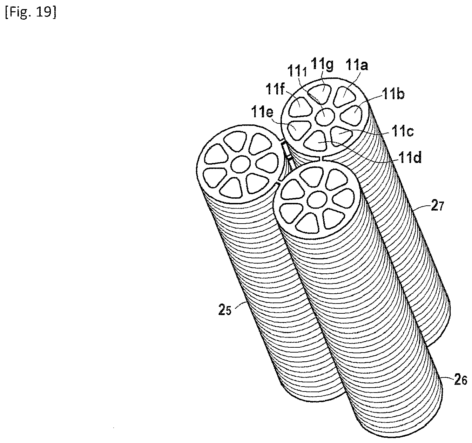

Tel que cela est illustré à la **figure 19**, ce troisième mode de réalisation permet également la fabrication d'une structure tridimensionnelle crue manipulable sous la forme de trois sous-structures crues **2₅**, **2₆**, **2₇** reliées en série par plusieurs ponts sécables répartis sur la hauteur de la structure tridimensionnelle. Tel que cela est représenté, les trois sous-structures crues **2₅**, **2₆**, **2₇** sont identiques et comportent chacune un canal central rectiligne **11₁** de section circulaire et sept canaux hélicoïdaux **11ₐ**, **11_{b}**, **11_{c}**, **11_{d}**, **11ₑ, 11_{f}, 11_{g}** de section triangulaire aux angles arrondis et formant une spirale autour du canal central rectiligne **11₁**.

Alternativement, bien que non illustré, les sous-structures tridimensionnelles peuvent être reliées par un unique pont sécable **13**, présent ou non sur toute leur hauteur de la structure tridimensionnelle crue manipulable **2**, et peuvent comporter des canaux en nombre et en forme variés. De même, bien que non illustré, le procédé selon l'invention permet de préparer plus de trois sous-structures tridimensionnelles détachables. Bien que non illustré, les sous-structures tridimensionnelles préparées selon ce dernier mode de réalisation peuvent être de forme et/ou de dimensions différentes.

Avant l'étape de frittage, le ou les ponts **13** reliant les sous-structures tridimensionnelles peuvent être rompus, permettant de produire des supports poreux monolithiques après l'étape de frittage.

Le procédé selon l'invention présente l'avantage d'offrir des caractéristiques constantes et uniformes aux supports inorganiques monolithiques poreux **1** en une seule étape de production, et de permettre l'accès à une grande variété de formes. Le procédé selon l'invention permet également de préparer des supports inorganiques monolithiques poreux **1** présentant un dévers sans nécessiter de supportage lors de sa fabrication.

L'invention concerne également un support inorganique monolithique poreux **1** obtenu par le procédé selon l'invention. Un tel support présente l'avantage d'avoir une structure homogène et est apte à être utilisé comme support de membrane de filtration.

Enfin, l'invention concerne le procédé de préparation d'une membrane de filtration tangentielle, ainsi qu'une membrane de filtration tangentielle obtenue par un tel procédé.

Dans la membrane de filtration tangentielle selon l'invention, la paroi du ou des canaux **11** de circulation ménagés dans le support inorganique monolithique poreux **1** est recouverte par au moins une couche séparatrice de filtration qui est destinée à être en contact avec le fluide à traiter et à assurer la filtration du milieu fluide à filtrer. La ou les couches séparatrices sont créées après la formation du support inorganique monolithique poreux **1**. Le procédé de préparation d'une membrane de filtration tangentielle conforme à l'invention comprend alors les étapes de préparation d'un support inorganique monolithique poreux **1** selon le procédé décrit ci-dessus, suivies (c'est-à-dire après l'étape finale de frittage pour la préparation du support inorganique monolithique poreux **1**) d'une étape de création d'une ou plusieurs couches séparatrices de filtration. Ce procédé est avantageusement décrit dans le brevet FR 2 723 541 au nom de la Demanderesse.

La création de la couche séparatrice de filtration peut être réalisée selon toute technique connue de l'homme du métier. En particulier, la couche séparatrice peut être déposée sur les parois des canaux **11** du support **1** par application d'une suspension contenant au moins une composition frittable destinée, après cuisson, à constituer une couche séparatrice de filtration. Une telle composition présente une constitution classiquement utilisée dans la production des membranes inorganiques de filtration. Cette composition contient au moins un oxyde, un nitrure, un carbure, ou un autre matériau céramique ou un de leur mélange, les oxydes, nitrures et carbures métalliques étant préférés. La composition frittable est mise en suspension, par exemple dans de l'eau. Pour éliminer le risque de présence d'agrégats et pour optimiser la dispersion des grains dans le liquide, la suspension obtenue est broyée, afin de détruire les agrégats et obtenir une composition composée essentiellement de particules élémentaires. La rhéologie de la suspension est ensuite ajustée avec des additifs organiques pour satisfaire aux exigences hydrodynamiques de pénétration dans les canaux des supports. La couche séparatrice, une fois déposée, est séchée puis frittée à une température qui dépend de sa nature, de la taille moyenne de ses grains et du seuil de coupure visé.

Cette étape de dépôt de couche séparatrice de filtration est répétée dans le cas d'une couche de séparation multicouche.

La membrane selon l'invention a une bonne résistance mécanique. Plus précisément, la membrane selon l'invention a une pression interne d'au moins 30 bars sans éclatement, et de préférence au moins 50 bars. Une pression interne de 50 bars est communément admise comme étant nécessaire et suffisante pour garantir une tenue mécanique des membranes pendant leur fonctionnement.

L'invention n'est pas limitée aux exemples décrits et représentés car diverses modifications peuvent y être apportées sans sortir de son cadre.

## Revendications

1. Procédé de fabrication d'au moins un support inorganique monolithique poreux (**1**) ayant une porosité comprise entre 10% et 60% et un diamètre moyen de pores appartenant à la gamme allant de 0,5 µm à 50 µm, à l'aide d'une machine d'impression 3D (**I**) comportant au moins une tête d'extrusion (**6**) montée mobile dans l'espace par rapport et au-dessus d'un plateau horizontal fixe (**5**), ladite machine d'impression 3D permettant le dépôt d'un cordon (**7_{i,j}**) d'une composition inorganique (**4**) pour bâtir, à partir d'un modèle 3D numérique (**M**), une structure tridimensionnelle crue manipulable (**2**) destinée à former le ou les supports inorganiques poreux monolithiques (**1**), le procédé consistant :
- À disposer de la composition inorganique (**4**), ladite composition inorganique (**4**) comportant une première phase inorganique solide pulvérulente sous la forme de particules de diamètre moyen compris entre 0,1 µm et 150 µm, et une seconde phase sous la forme d'une matrice comprenant au moins un polymère thermofusible,
- À alimenter la tête d'extrusion (**6**) de la machine d'impression 3D (**I**) avec la composition inorganique (**4**), ladite tête d'extrusion (**6**) étant à une température permettant l'extrusion de la composition inorganique (**4**) pour former le cordon (**7_{i,j}**)
- À bâtir à l'aide dudit cordon (**7_{i,j}**) sur ledit plateau horizontal (**5**) la structure tridimensionnelle crue manipulable (**2**) conforme au modèle 3D numérique (**M**),
- À disposer dans un four de traitement thermique cette structure tridimensionnelle crue manipulable (**2**) afin d'y réaliser une opération de frittage à une température comprise entre 0,5 et 1 fois la température de fusion d'au moins un matériau formant la phase inorganique solide pulvérulente.

2. Procédé selon la revendication 1, dans lequel la consolidation de la structure tridimensionnelle crue manipulable (**2**) est accélérée au fur et à mesure de l'extrusion dudit cordon (**7_{i,j}**) à l'aide d'un dispositif de consolidation (**10**).

3. Procédé selon la revendication 2, dans lequel le dispositif de consolidation (**10**) est un dispositif de refroidissement contrôlé provoquant la solidification d'au moins un polymère thermofusible contenu dans la matrice.

4. Procédé selon la revendication 2 ou 3, dans lequel la structure tridimensionnelle crue manipulable (**2**) est réalisée avec un dévers sans mettre en oeuvre de supportage.

5. Procédé selon l'une quelconque des revendications précédentes, dans lequel la phase inorganique solide pulvérulente comprend un ou plusieurs oxydes, et/ou carbures et/ou nitrures, et/ou métaux, de préférence choisi(s) parmi l'oxyde de titane, l'oxyde d'aluminium, l'oxyde de zirconium, l'oxyde de magnésium, le carbure de silicium, le titane et l'acier inoxydable, et en particulier l'oxyde de titane.

6. Procédé selon l'une quelconque des revendications précédentes, dans lequel la rhéologie de la composition inorganique (**4**) est ajustée grâce à au moins l'une des caractéristiques suivantes : la granularité de la phase inorganique solide pulvérulente, la nature, et/ou à la proportion du ou des polymères thermofusibles, la température de la composition inorganique (**4**).

7. Procédé selon l'une quelconque des revendications précédentes **caractérisé en ce que** la structure tridimensionnelle crue manipulable (**2**) est sous la forme de plusieurs sous-structures tridimensionnelles (**2₃**, **2₄**) détachables les unes des autres.

8. Procédé selon la revendication précédente **caractérisé en ce que** la structure tridimensionnelle crue manipulable (**2**) est sous la forme de plusieurs sous-structures tridimensionnelles (**2₃**, **2₄**) reliées et maintenues les unes aux autres par au moins un pont sécable (**13**) réalisé à l'aide du cordon (**7_{i,j}**).

9. Procédé selon l'une quelconque des revendications précédentes **caractérisé en ce que** la composition inorganique (**4**) est sous forme de filament.

10. Procédé selon l'une quelconque des revendications 1 à 8, **caractérisé en ce que** la composition inorganique (**4**) est sous forme de granulé.

11. Procédé de préparation d'une membrane de filtration tangentielle comprenant la fabrication selon l'une quelconque des revendications précédentes d'un support inorganique monolithique poreux (**1**) dans lequel est ménagé au moins un canal (**11**) de circulation du milieu fluide à traiter, suivie d'une étape de création d'au moins une couche séparatrice sur les parois du ou des canaux (**11**).

12. Support inorganique monolithique poreux (**1**) préparé selon l'une quelconque des revendications 1 à 10 supportant une pression interne d'au moins 30 bars sans éclatement.

13. Membrane de filtration tangentielle préparée selon la revendication 11 supportant une pression interne d'au moins 30 bars sans éclatement.

## Patentansprüche

1. Verfahren zur Herstellung wenigstens eines porösen monolithischen anorganischen Trägers (1) mit einer Porosität zwischen 10 % und 60 % und einem mittleren Porendurchmesser im Bereich von 0,5 µm bis 50 µm mit Hilfe einer 3D-Druckmaschine (I), die wenigstens einen Extrusionskopf (6) umfasst, der relativ zu und oberhalb einer festen horizontalen Platte (5) räumlich beweglich angebracht ist, wobei die 3D-Druckmaschine das Abscheiden eines Streifens (7_{i,j}) einer anorganischen Zusammensetzung (4) ermöglicht, um aus einem digitalen 3D-Modell (M) eine handhabbare dreidimensionale Rohstruktur (2) zu konstruieren, die dazu bestimmt ist, den oder die monolithischen porösen anorganischen Träger (1) zu bilden, wobei das Verfahren darin besteht:
- anorganische Zusammensetzung (4) anzuordnen, wobei die anorganische Zusammensetzung (4) eine erste pulverförmige feste anorganische Phase in Form von Partikeln mit einem mittleren Durchmesser zwischen 0,1 µm und 150 µm und eine zweite Phase in Form einer Matrix, welche wenigstens ein durch Wärme schmelzbares Polymer aufweist, umfasst,
- den Extrusionskopf (6) der 3D-Druckmaschine (I) mit der anorganischen Zusammensetzung (4) zu beaufschlagen, wobei der Extrusionskopf (6) auf einer Temperatur ist, welche die Extrusion der anorganischen Zusammensetzung (4) ermöglicht, um den Streifen (7_{i,j}) zu bilden,
- die handhabbare dreidimensionale Rohstruktur (2) mit Hilfe des Streifens (7_{i,j}) auf der horizontalen Platte (5) entsprechend dem digitalen 3D-Modell (M) zu konstruieren,
- diese handhabbare dreidimensionale Rohstruktur (2) in einem Wärmebehandlungsofen anzuordnen, um darin einen Sintervorgang bei einer Temperatur zwischen dem 0,5- und 1-fachen der Schmelztemperatur wenigstens eines die pulverförmige feste anorganische Phase bildenden Materials durchzuführen.

2. Verfahren nach Anspruch 1, bei dem die Verfestigung der handhabbaren dreidimensionalen Rohstruktur (2) in dem Maße des Extrudierens des Streifens (7_{i,j}) mit Hilfe einer Verfestigungsvorrichtung (10) beschleunigt wird.

3. Verfahren nach Anspruch 2, bei dem die Verfestigungsvorrichtung (10) eine gesteuerte Kühlvorrichtung ist, welche die Verfestigung wenigstens eines in der Matrix enthaltenen durch Wärme schmelzbaren Polymers bewirkt.

4. Verfahren nach Anspruch 2 oder 3, bei dem die handhabbare dreidimensionale Rohstruktur (2) mit einer Überhöhung ohne Einsatz einer Unterstützung hergestellt wird.

5. Verfahren nach einem der vorhergehenden Ansprüche, bei dem die pulverförmige feste anorganische Phase ein oder mehrere Oxide und/oder Karbide und/oder Nitride und/oder Metalle, vorzugsweise ausgewählt aus Titanoxid, Aluminiumoxid, Zirkoniumoxid, Magnesiumoxid, Siliziumkarbid, Titan und rostfreiem Stahl und insbesondere Titanoxid umfasst.

6. Verfahren nach einem der vorhergehenden Ansprüche, bei dem die Rheologie der anorganischen Zusammensetzung (4) durch wenigstens eines der folgenden Merkmale eingestellt wird: die Körnung der pulverförmigen festen anorganischen Phase, die Beschaffenheit und/oder den Anteil des oder der durch Wärme schmelzbaren Polymere, die Temperatur der anorganischen Zusammensetzung (4).

7. Verfahren nach einem der vorhergehenden Ansprüche, **dadurch gekennzeichnet, dass** die handhabbare dreidimensionale Rohstruktur (2) in Form mehrerer voneinander lösbarer dreidimensionaler Teilstrukturen (2₃, 2₄) vorliegt.

8. Verfahren nach dem vorhergehenden Anspruch, **dadurch gekennzeichnet, dass** die handhabbare dreidimensionale Rohstruktur (2) in Form mehrerer dreidimensionaler Teilstrukturen (2₃, 2₄) vorliegt, die durch wenigstens eine teilbare Brücke (13), welche mit Hilfe des Streifens (7_{i,j}) realisiert ist, miteinander verbunden und aneinander gehalten sind.

9. Verfahren nach einem der vorhergehenden Ansprüche, **dadurch gekennzeichnet, dass** die anorganische Zusammensetzung (4) in Form eines Filaments vorliegt.

10. Verfahren nach einem der Ansprüche 1 bis 8, **dadurch gekennzeichnet, dass** die anorganische Zusammensetzung (4) in Form von Granulat vorliegt.

11. Verfahren zur Herstellung einer Membran für die Tangentialfiltration, umfassend die Herstellung nach einem der vorhergehenden Ansprüche eines porösen monolithischen anorganischen Trägers (1), in dem wenigstens ein Kanal (11) zur Zirkulation des zu behandelnden fluiden Mediums ausgebildet ist, woran sich ein Schritt des Erzeugens wenigstens einer Trennschicht an den Wänden des Kanals oder der Kanäle (11) anschließt.

12. Poröser monolithischer anorganischer Träger (1), hergestellt nach einem der Ansprüche 1 bis 10, der einen Innendruck von wenigstens 30 bar aushält, ohne zu bersten.

13. Membran für die Tangentialfiltration, hergestellt nach Anspruch 11, die einen Innendruck von wenigstens 30 bar aushält, ohne zu bersten.

## Claims

1. A method for manufacturing at least one monolithic inorganic porous support (1) having a porosity comprised between 10% and 60% and an average pore diameter ranging from 0.5 µm to 50 µm, using a 3D printing machine (I) including at least one extrusion head (6) movably mounted in space relative to and above a fixed horizontal plate (5), said 3D printing machine allowing the deposition of a string (7i,j) of inorganic composition (4) to build, from a 3D digital model (M), a manipulable three-dimensional raw structure (2) intended to form the monolithic inorganic porous support(s) (1), the method consisting of:
- having the inorganic composition (4), said inorganic composition (4), including a first powdery solid inorganic phase in the form of particles with an average diameter comprised between 0.1 µm and 150 µm, and a second phase in the form of a matrix comprising at least one hot-melt polymer,
- supplying the extrusion head (6) of the 3D printing machine (I) with the inorganic composition (4), said extrusion head (6) being at a temperature allowing the extrusion of the inorganic composition (4) to form the string (7i,j),
- building, using said string (7i,j) on said horizontal plate (5), the manipulable three-dimensional raw structure (2) in accordance with the 3D digital model (M),
- placing this manipulable three-dimensional raw structure (2) in a heat treatment furnace in order to carry out a sintering operation at a temperature comprised between 0.5 and 1 times the melting temperature of at least one material forming the powdery solid inorganic phase.

2. The method according to claim 1, wherein the consolidation of the manipulable three-dimensional raw structure (2) is accelerated as said string (**7_{i,j}**) is extruded using a consolidation device (10).

3. The method according to claim 2, wherein the consolidation device (10) is a controlled cooling device causing the solidification of at least one hot-melt polymer contained in the matrix.

4. The method according to claim 2 or 3, wherein the manipulable three-dimensional raw structure (2) is made with a tilt without implementing a supporting means.

5. The method according to any one of the preceding claims, wherein the powdery solid inorganic phase comprises one or more oxides, and/or carbides and/or nitrides, and/or metals, preferably chosen among titanium oxide, aluminum oxide, zirconium oxide, magnesium oxide, silicon carbide, titanium and stainless steel, and particularly titanium oxide.

6. The method according to any one of the preceding claims, wherein the rheology of the inorganic composition (4) is adjusted thanks to at least one of the following characteristics: the granularity of the powdery solid inorganic phase, the nature, and/or the proportion of the hot-melt polymer(s), the temperature of the inorganic composition (4).

7. The method according to any one of the preceding claims **characterized in that** the manipulable three-dimensional raw structure (2) is in the form of several three-dimensional sub-structures (2₃, 2₄) detachable from each other.

8. The method according to the preceding claim **characterized in that** the manipulable three-dimensional raw structure (**2**) is in the form of several three-dimensional sub-structures (2₃, 2₄) connected and held together by at least one breakable bridge (13) made using the string (7_{i,j}).

9. The method according to any one of the preceding claims **characterized in that** the inorganic composition (4) is in the form of a filament.

10. The method according to any one of claims 1 to 8, **characterized in that** the inorganic composition (4) is in the form of a pellet.

11. A method for preparing a tangential filtration membrane comprising the manufacture according to any one of the preceding claims of a monolithic inorganic porous support (1) in which is arranged at least one channel (11) for the circulation of the fluid medium to be treated, followed by a step of creating at least one separating layer on the walls of the channel(s) (11).

12. A monolithic inorganic porous support (1) prepared according to any one of claims 1 to 10 withstanding an internal pressure of at least 30 bars without bursting.

13. A tangential filtration membrane prepared according to claim 11 withstanding an internal pressure of at least 30 bars without bursting.
